**Europäisches Patentamt**

**European Patent Office**

**Office européen des brevets**

(19)

(11) Veröffentlichungsnummer: **0 299 959**
**B1**

(12) # EUROPÄISCHE PATENTSCHRIFT

(45) Veröffentlichungstag der Patentschrift:
**15.11.89**

(21) Anmeldenummer: **87902060.8**

(22) Anmeldetag: **20.03.87**

(86) Internationale Anmeldenummer:
**PCT/EP 87/00159**

(87) Internationale Veröffentlichungsnummer:
**WO 87/05867 (08.10.87 Gazette 87/22)**

(51) Int. Cl.⁴: **B 60 K 41/08**, B 60 K 41/28

(54) **FAHRZEUG-BEDIEN- UND -FAHRTREGELEINRICHTUNG.**

(30) Priorität: **27.03.86 PCT/EP86/00185**

(43) Veröffentlichungstag der Anmeldung:
**25.01.89 Patentblatt 89/4**

(45) Bekanntmachung des Hinweises auf die Patenterteilung:
**15.11.89 Patentblatt 89/46**

(84) Benannte Vertragsstaaten:
**DE FR GB**

(56) Entgegenhaltungen:
**DE-A-3 506 363**
**DE-A-3 523 352**
**FR-A-2 557 041**
**US-A-4 263 997**
**US-A-4 408 293**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **PETZOLD, Rainer, Oberhofstrasse 79, D-7990 Friedrichshafen (DE)**

(74) Vertreter: **Raue, Reimund, Zahnradfabrik Friedrichshafen AG Löwentaler Strasse 100 Postfach 2520, D-7990 Friedrichshafen 1 (DE)**

EP 0 299 959 B1

**Beschreibung**

Diese Erfindung betrifft eine Fahrzeug-Bedien- und -Fahrtregeleinrichtung nach dem Oberbegriff von Anspruch 1.

Es ist bekannt, ein Fahrzeug mit einem Automatgetriebe im Antriebsstrang über einen Fahrbereichshebel und ein Gaspedal zu bedienen, wobei der Füllungsgrad des Motors je nach der angestrebten Fahrgeschwindigkeit und den Fahrwiderständen - z. B. Steigung, Gefälle und fahrgeschwindigkeitsabhängiger Luftwiderstand - über das bekannte Gaspedal vom Fahrer reguliert wird. Das Getriebe wird dabei nach relativ grob differenzierten lastabhängigen Schaltpunkten in Anpassung an das Motorkennfeld geschalten - ATZ 85 (1983) 6 ab Seite 401 -.

Es ist weiter bekannt, bei einem Kraftfahrzeug mit einem Automatgetriebe - DE-OS-3 506 363 - über einen Fahrtgeschwindigkeitsregler den Motor so zu beeinflussen, daß das Fahrzeug ohne Betätigung des Gaspedals in einer nahezu konstanten Geschwindigkeit fährt, wobei über eine weitere elektronische Einrichtung auch das Getriebe in die Anpassung an die vorgegebene Geschwindigkeit mit einbezogen ist. Dabei wird über eine Recheneinheit die optimale Schaltstellung des Getriebesystems für einen minimalen Kraftstoffverbrauch für den jeweiligen Fahrzeugbetriebszustand ermittelt. Weicht die ermittelte Schaltstellung von dem gerade eingelegten Gang ab, wird zur Durchführung der Schaltung im Automatgetriebe die über den Motoreingriff erfolgte Geschwindigkeitsregelung vorübergehend aufgehoben.

Und schließlich ist aus der DE-OS-3 506 363 bekannt, neben der Aktivierung des Fahrtgeschwindigkeitsreglers über eine erste Betätigungstaste nach der Unterbrechung dieser Einrichtung durch Betätigung des Bremspedals oder die Durchführung einer Gangschaltung über eine zweite Betätigungstaste die vorher eingestellte Fahrzeuggeschwindigkeit wieder zu erreichen, ohne daß das Gaspedal betätigt wird. Die durch eine Gangumschaltung bedingte neue Motordrehzahl wird selbsttätig nachgeregelt, damit die vor der Schaltung eingestellte konstante Fahrzeuggeschwindigkeit wieder erreicht wird. Dabei wird in einer vorprogrammierten Beschleunigung die vorherige Fahrgeschwindigkeit wieder angestrebt und auch erreicht, wenn die vorhandene Motorleistung und die Fahrwiderstände, z. B. Steigung, dies zulassen.

Solche Einrichtungen verbessern die Bedienung eines Kraftfahrzeuges und können in konstanter Fahrt und auch während einer Beschleunigung zu einer verbrauchsorientierten Fahrweise führen, weil während der Fahrt mit konstanter Fahrzeuggeschwindigkeit diese nicht nur über die Gasregelung, z. B. Vollgas, sondern auch über geeignete mit einbezogene Schaltungen erfolgt. In bekannter Weise sind für eine ökonomische Fahrweise die Hoch- und Rückschaltedrehzahlen gegenüber einer beschleunigungsbetonten Fahrweise entsprechend verändert. Die Gesamtwirkung ist aber relativ gering, weil diese Einrichtung infolge der zusätzlichen Bedienung selten genutzt wird. Die Bedienung ist zusätzlich nötig und umständlich, so daß fast nur in sehr ruhigen Verkehrssituationen die Nutzung erfolgt.

Es ist deshalb Aufgabe der Erfindung, eine Fahrzeug-Bedien- und -Fahrtregeleinrichtung nach dem Oberbegriff von Anspruch 1 so weiterzuentwickeln, daß eine elektronische Steuer- und Regeleinrichtung den Motor und das Getriebe noch vorteilhafter beeinflußt und den Fahrer weiter bei der Bedienung des Fahrzeuges entlastet.

Diese Aufgabe wird mit den kennzeichnenden Merkmalen von Anspruch 1 erfüllt.

Die Reduzierung der Bedienung auf ein Beschleunigungs- und ein Verzögerungspedal, die beide auf eine elektronische Steur- und Regeleinrichtung wirken, vereinfachen nicht nur die Bedienung, sondern ermöglichen auch die Anwendung einer optimalen Anpassung von Motor, Getriebe und Fahrzeug in allen Fahrzuständen. Dabei kann die elektronische Steuer- und Regeleinrichtung aus einer gemeinsamen Einrichtung für die Motorbeeinflussung, Geschwindigkeits-Konstanthaltung, Getriebe- und Kupplungssteuerung oder auch aus verketteten Einzelsteuergeräten für die Hauptfunktion, wie aus der DE-OS-3 506 363 bekannt, bestehen. Durch die Kombination des Beschleunigungs und Verzögerungspedals mit der elektronischen Steuer- und Regeleinrichtung und infolge Erweiterung der Motor- und Getriebebeeinflussung in Verbindung mit der einfachen Bedienung können die gewünschten Fahrzustände viel optimaler mit den Motor- und Getriebecharakteristiken verknüpft werden. Denn kein Fahrer ist in der Lage, ein Gaspedal so zu betätigen, daß der Motor immer im Optimum des Kennfeldes betrieben wird. Bei bekannten Automatgetrieben werden die Schaltpunkte oder Schaltfolgen gaspedalstellungsabhängig dem Getriebe von einem elektronischen Steuergerät vorgegeben, so daß eine hohe Pendeldynamik auch eine hohe Schaltpunktveränderung zur Folge hat. Bei der vorliegenden Erfindung wählt der Fahrer nur noch den gewünschten Fahrzustand und nicht mehr die Motorlast. Die elektronische Steuer- und Regeleinrichtung registriert die gewünschten Fahrzustände, die vom Fahrer über das Beschleunigungs- und Verzögerungspedal eingegeben werden, und wählt Motorlast und Getriebeübersetzung nach einer vorgegebenen Strategie, z. B. Kraftstoffe verbrauchsorientiert (damit können wesentlich größere Fahranteile im optimalen Betriebsbereich des Motors erreicht werden). Auch die Änderung der Fahrwiderstände bei konstanter Geschwindigkeit werden von einer Automatik in der elektronischen Steuer- und Regeleinrichtung wesentlich feinfühliger aufgenommen als von einem Fahrer. Dieses System bietet auch eine höhere Sicherheit, weil der Fahrer auch bei konstanter Geschwindigkeit die Reaktionszeit bis zum Bremsen vorbeugend verringern kann. Alle Vorteile des Systems können nur mit einem automatisch schaltenden Getriebe voll genützt werden. Einfache Vorteile ergeben sich aber auch mit einem halbautomatischen oder gar mit einem im Prinzip von Hand geschaltetem Getriebe. Wenn die Ergebnisse der elektronischen Steuer- und Regeleinrichtung in Form einer Empfehlung an den Fahrer weitergegeben werden - Hoch- oder Rückschaltaufforderungen optisch oder akustisch -. Schneller und für den Fahrer in der Bedienung einfacher ist jedoch die vollautomatische Auslegung, weil fortwährend der gewünschte Fahrzustand mit dem Istzustand im Antriebsstrang verglichen wird, kann sofort bei nicht Übereinstimmung der Gradienten für die Leistungsänderung und in Abhängigkeit von der programmierten Fahrstrategie die günstigste Motordrehzahl in Verbindung mit dem günstigsten Gang ausgewählt und zur Realisierung an die Betätigungseinrichtungen im Motor und Getriebe gegeben werden. Dieser Ablauf ermöglicht für die neueinzustellende Leistung zwischen Motor- und Getriebeverstellung jeweils das Optimum zu suchen in einer Zeit, die unter Einschaltung des Fahrers nicht erreichbar ist.

Mit den Ansprüchen 2 bis 8 wird die Erfindung in vorteilhafter Weise ausgestaltet.

Mit einer geeigneten Programmierung ist in relativ einfacher Weise die elektronische Steuer- und Regeleinrichtung an verschiedene Anforderungen (Strategien) leicht anpaßbar, ohne daß die Bedienung durch den Fahrer sich verändert. Durch die frei programmierbare Beschleunigungsanforderung in Verbindung mit der Betätigung des Beschleunigungspedals kann eine weitere günstige Anpassung erzielt werden. Die bei der Betätigung des Verzögerungspedals angesteuerten Funktionen führen zu weiteren Vereinfacherungen der Bedienung, weil mehrere sinnvoll zusammenhängende Funktionen von nur einer Bedieneinrichtung aus aktiviert werden. Über Zeitglieder in der elektronischen Steuer- und Regeleinrichtung, insbesondere in Verbindung mit der Betätigung des Verzögerungspedals lassen sich alle gewünschten Funktionen in Abhängigkeit von der Bediendynamik erzielen. Es kann auch sinnvoll und einfacher für die Bedienung sein, die Freilaufwirkung zusätzlich oder in Verbindung mit der Betätigung des Beschleunigungspedals anzusteuern, weil z. B. diese in Verbindung mit einer angestrebten Fahrzeuggeschwindigkeit in Bergabfahrt erwünscht ist, wobei die konstante Geschwindigkeit in einer solchen Fahrsituation von untergeordneter Bedeutung sein kann.

Aus der DE-OS-3 523 352 ist eine Fahrtgeschwindigkeitsregelung bei einem Kraftfahrzeug bekannt, bei der über eine elektronische Regeleinrichtung ein Stellglied für die Betriebsmittelzufuhr verstellt wird. Bei der Betätigung des Gas- und Bremspedals wird eine Beschleunigungs- und bei einer Nichtbetätigung (b = 0) eine Geschwindigkeitsregelung selbsttätig durchgeführt. Die Höhe der Beschleunigung wird vom Grad der Betätigung des Gas- bzw. Bremspedals und die Höhe der konstant zu haltenden Geschwindigkeit von der zuletzt mit dem Beschleunigungspedal vorgegebenen und erreichten Fahrzeuggeschwindigkeit erzielt. Mit dieser Einrichtung, die eine Entlastung des Faherers ermöglicht, wird jedoch kein Einfluß genommen auf eine Gestaltung des Antriebsstranges, weil die Einhaltung der konstanten Fahrgeschwindigkeit allein über die zulässige Beeinflussung der Motordrehzahl über eine Kraftstoffzufuhr - also auch bei Vollgaserfolgt. Die Einbeziehung eines Schalt- oder Automatgetriebes in die Fahrtgeschwindigkeitsregelung ist dieser Schrift nicht zu entnehmen.

Weitere Einzelheiten der Erfindung werden anhand von Ausführungsbeispielen und Zeichnungen erläutert. Es zeigen:

Fig. 1   ein Blockschaltbild der Fahrzeug-Bedien- und -Fahrtregeleinrichtung;
Fig. 2   eine Steuerkurve der Beschleunigung in Abhängigkeit vom Betätigungswinkel am Beschleunigungspedal;
Fig. 3   eine Fahrwiderstandsdarstellung in mehreren Fahrwiderstandskurven;
Fig. 4   ein Grobablauf in einer Fahrzeug-Bedien- und -Fahrtregelinrichtung;
Fig. 5   ein Leistungskennfeld.

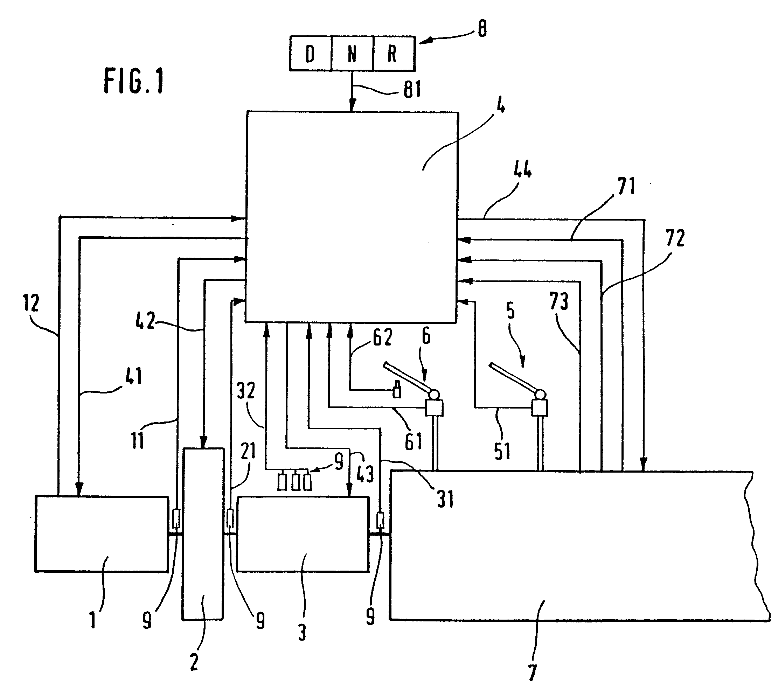

In dem Blockschaltbild der Fahrzeug-Bedien- und -Fahrtregeleinrichtung nach Fig. 1 ist mit 1 der Motor, 2 eine Kupplung und 3 ein z. B. Automatgetriebe bezeichnet, wobei das Automatgetriebe und die Kupplung wie bekannt als Umlauträdergetriebe mit einem überbrückbaren Drehmomentwandler als Kupplung ausgeführt, aber auch als automatisiertes Vorgelegegetriebe mit einer z. B. gesondert angeordneten automatisierten Trocken- oder Naßkupplung ausgeführt sein können. Die elektrische Steuer- und Regeleinrichtung 4 ist über Steuerleitungen 41, 42, 43 zu deren Beeinflussung mit dem Motor 1 mit der Kupplung 2 und dem Getriebe 3 verbunden. Über geeignete Sensoren oder Stellglieder 9 werden über Leitungen 11, 21, 31 und 32 die Motordrehzahl, die Getriebeeingangs- bzw. Kupplungsausgangsdrehzahl und die Getriebeabtriebsdrehzahl sowie evtl. die Getriebestellung der elektronischen Steuer- und Regeleinrichtung 4 zugeleitet. Weiter wird diese aus dem Fahrzeug 7 noch mit den Informationen Handbrems- 71 und Fußbremsbetätigung 72 sowie der Abtriebsdrehzahl 73 - evtl. aus allen Abtriebsrädern - versorgt. Die Betriebsbremse des Fahrzeuges, die sowohl aus einer allgemein bekannten wie auch zusätzlich noch aus einer Strömungsbremse bestehen kann, ist direkt aber auch über die Steuer- und Regeleinrichtung und damit über die Leitung 44 beeinflußbar. Zur Bedienung ist das Beschleunigungspedal 5 über die Steuerleitung 51 und das Verzögerungspedal 6 über die Steuerleitung 61, 62 und die Fahrbereichswähleinrichtung 8 über die Leitung 81 mit der elektronischen Steuer- und Regeleinrichtung 4 verbunden.

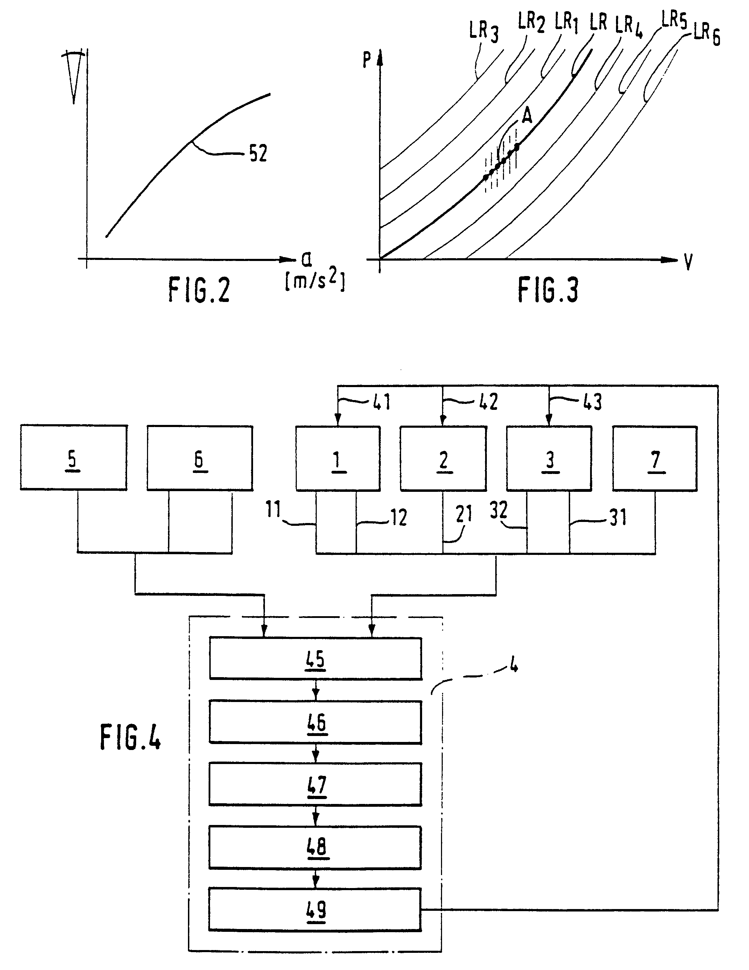

Die Fig. 2 zeigt eine mögliche Steuerkurve 52, die die Beschleunigung $\underline{a}$ in Abhängigkeit vom Betätigungswinkel oder auch Betätigungsweg des Beschleunigungspedals darstellt.

In Fig. 3 ist die Fahrwiderstandsleistung P über der Fahrzeuggeschwindigkeit V dargestellt, wobei die Kurve LR den Luft- und Rollwiderstand in der Ebene darstellt. Die weiteren schwächer gezeichneten Kurven LR1 bis LR3 beinhalten verschiedene Steigungswiderstände, und LR4 bis LR6 zeigen die Verschiebung, die sich durch eine Fahrt im Gefälle ergeben. Mit A sind Rechenintervalle angegeben, die sich z. B. bei einer beschleunigten Fahrt in der Ebene ergeben. Die Fig. 4 zeigt stark vereinfachten Ablauf in der elektronischen Steuer- und Regeleinrichtung 4. Mit der Betätigung des Beschleunigungs- 5 und Verzögerungspedal 6 gibt der Fahrer den

3

gewünschten Fahrzustand in die elektronische Steuer- und Regeleinrichtung 4 ein. Aus der Istzustandsanalyse, die sich z. B. aus den Drehzahlen, Leitungen 11, 21, 31 vom Motor 1, Kupplung 2 und dem Getriebe 3 sowie der Motorlast 12 und der Schaltstellung 32 aus dem Getriebe 3 und dem Signalfluß aus dem Fahrzeug 7 - Fußbremse 72, Handbremse 71, Abtriebsdrehzahl, z. B. an den Rädern 73 gebildet wird - und dem gewünschten Fahrzustand wird die Leistungsdifferenz 45 im Zeitintervall gerechnet. Unter Berücksichtigung der Pedal- und Fahrzeugdynamik wird dann der Gradient für die Leistungsänderung 46 hochgerechnet. Aus einer weiteren Rechnung unter Berücksichtigung z. B. eines Verbrauchsoptimums und der Fahrzeugdynamik (Schaltfrequenz) ergibt sich die Motorlast und Motordrehzahländerung 41.

In einer weiteren Rechnung wird aus der neuen Motordrehzahl die neue Getriebestellung 48 errechnet. Dann erfolgt die Signalausgabe 49 für die Motorbeeinflussung 41, Kupplungsbeeinflussung 42 und Getriebebeeinflussung 43.

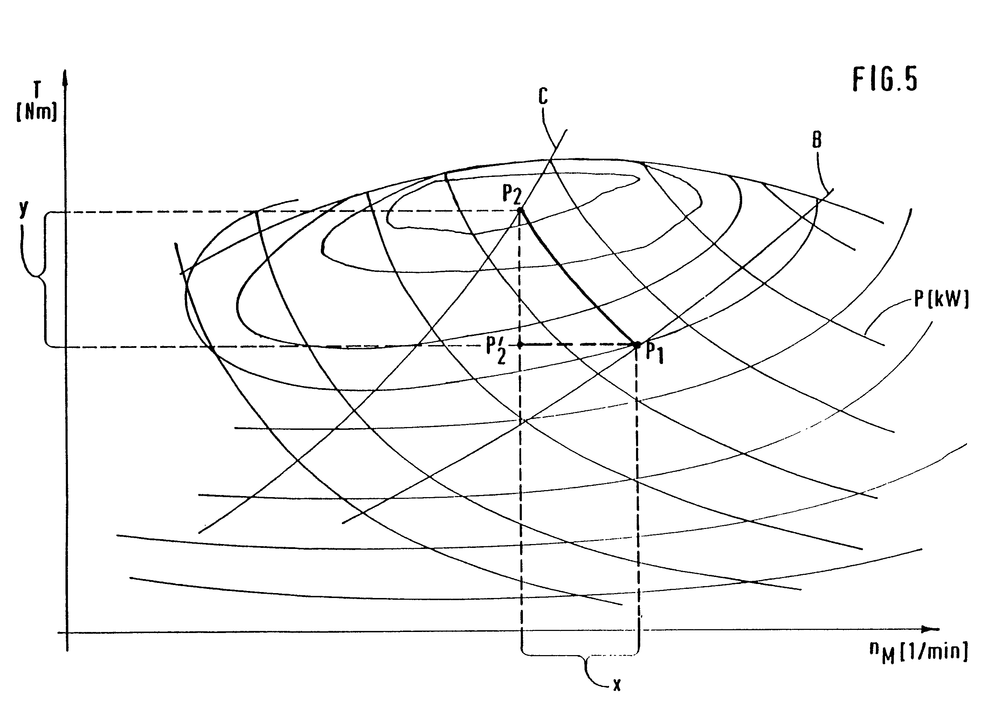

Im Motorkennfeld nach Fig. 5 ist:

T = Drehmoment (NM)
nM = Motordrehzahl (1/min)
be = spezifischer Verbrauch (gKWh)
P = linienkonstante Fahrwiderstandleistung (KW)
B = Fahrwiderstandslinie einer ersten Getriebeübersetzung
C = Fahrwiderstandslinie einer zweiten Getriebeübersetzung

Der bisher übliche Schaltverlauf bei Schaltungen von Automatgetrieben ist mit der Linie $P_1$ nach $P_2$ gekennzeichnet. Wie einfach zu erkennen, ist nach der Schaltung die Leistung im Punkt $P_2'$ geringer als vorher. Der Fahrer muß also die Leistungsdifferenz mit dem Gaspedal kompensieren. Gleichzeitig neigen so geschaltete automatische Getriebe bei ungünstigen Fahrwiderständen zum Schaltpendeln.

Mit der Kurve von $P_1$ nach $P_2$ ist der Schaltverlauf bei konstanter Leistung dargestellt. Da die elektronische Steuer- und Regelanlage die zur Verfügung stehende Gangübersetzung kennt, wählt diese die Übersetzung aus, mit der bei konstanter Leistung z. B. der günstigste Verbrauch erzielt wird. Die Schaltung mit dem Gangsprung wird also nicht bei konstantem Drehmoment durchgeführt, sondern die Automatik übernimmt unmittelbar nach der Schaltung die Nachregelung (Regelbereich Y). Es wird also nach dem schaltungsbedingten Motoreingriff sofort die richtige Motorlast eingestellt. Dadurch steht dem Fahrer nach der Schaltung die gleiche Leistung zur Verfügung. Er braucht also nur einzugreifen, wenn er seinen Fahrzustand durch weiteres Beschleunigen oder auch Verzögern ändern möchte.

Die Fahrzeug-Bedien- und -Fahrtregeleinrichtung wirkt wie folgt: Das Beschleunigungspedal 5 wird vom Fahrer solange betätigt (getreten) wie der Fahrer beschleunigen möchte. Die Höhe der Beschleunigung kann dabei je nach Pedalwinkel variiert werden. Ein mögliches Beispiel ist aus der Steuerkurve 52 der Fig. 2 ableitbar.

- Pedalwinkel ist proportional der Beschleunigung,
- kleiner Winkel bedeutet kleine Beschleunigung,
- großer Winkel bedeutet große Beschleunigung.

Dieses dem Betätigungswinkel oder Weges proportionale Signal wird über die Steuerleitung 51 an die elektronische Steuer- und Regeleinrichtung 4 geleitet. Ist die gewünschte Geschwindigkeit erreicht, geht der Fahrer vom Beschleunigungspedal herunter. Damit wird von einer an und für sich bekannten Fahrzeuggeschwindigkeitsregeleinrichtung, die in der elektronischen Steuer- und Regeleinrichtung integriert aber auch gesondert angeordnet sein kann, die Motorlast und in Verbindung mit einem Automatgetriebe 3 die Übersetzung den wechselnden Fahrwiderständen angepaßt. Die Verstellung von Motor und Getriebe wird nach einer Fahrstrategie, z. B. verbrauchsorientiert, ausgewählt.

Soll die Tempostatwirkung aufgehoben werden, wird vom Fahrer das Verzögerungspedal 6 (Bremspedal) betätigt. Dabei werden die nachfolgend genannten Pedalwinkel unterschieden.

1. Sehr kleiner Winkel - die Tempostatwirkung wird über ein Signal (Steuerleitung 61) aufgehoben, und gleichzeitig kann von der elektronischen Steuer- und Regeleinrichtung über die Steuerleitungen 42 oder 43 die Kupplung 2 geöffnet oder auch das Getriebe 3 auf N (Neutral) gestellt werden, ohne daß eine Verstellung der Fahrbereichswähleinrichtung 8 nötigt ist. Damit wird ein Freilaufeffekt erzielt, der je nach Fahrprofil bzw. Fahrwiderstand zu einer Verringerung oder auch bergab zu einer Erhöhung der Geschwindigkeit führt.

2. Kleiner Winkel - Die Tempostatwirkung ist bereits durch die Betätigung mit einem sehr kleinen Winkel aufgehoben. Die Kupplung wird oder ist geschlossen, und das Getriebe ist oder wird in einen der Fahrgeschwindigkeit entsprechenden Gang geschaltet, so daß eine Motorbremswirkung entsteht. Dabei können noch relativ hohe Schaltpunkte für eine Rückschaltung wirksam werden, so daß die Motorbremswirkung verstärkt werden kann.

3. Größerer Winkel - Mit dem Überschreiten eines definierten kleinen Betätigungswinkels wird die Betriebsbremse aktiviert. Dies kann direkt, aber auch über die elektronische Steuer- und Regeleinrichtung erfolgen. Besonders dann, wenn das Fahrzeug mit einer Einrichtung ausgestattet ist, die eine Überlastung der Betriebsbremse verhindert, erscheint es als sinnvoll, das Verzögerungspedal über die elektronische Steuer- und Regeleinrichtung auf die Betriebsbremse wirken zu lassen. Außerdem ist auch die Kombination mit einer verschleißfreien Strömungsbremse oder ähnlichen Einrichtungen, wie z. B. einer Bremsenergiespeicherung,

4

möglich. Das Verzögerungspedal wirkt zumindest ab der Überschreitung des kleinen Betätigungswinkels im Prinzip ähnlich wie das Beschleunigungspedal. Verzögerungspedalwinkel ist proportional der Verzögerung, kleiner Winkel ergibt kleinere Verzögerung, großer Winkel ergibt größere Verzögerung. Das Verzögerungspedal wird betätigt (getreten), bis eine gewünschte eben verzögerte Geschwindigkeit erreicht ist. Danach wird die Geschwindigkeit wiederum gehalten.

Die Automatik errechnet also entsprechend dem Winkel vom Verzögerungspedal 6, welche Bremsenergie benötigt wird, z. B. beginnend mit nur dem Fahrwiderstand über die Motorbremswirkung bis zur Betriebsbremse. Die unter 1 genannte Funktion in Verbindung mit der Betätigung des Verzögerungspedals könnte auch in Verbindung mit dem Beschleunigungspedal 5 abgerufen werden, wobei z. B. ein kurzes Antippen des Beschleunigungspedals die Freilaufwirkung bewirken könnte.

In der elektronischen Steuer- und Regeleinrichtung 4 wird die vom Fahrer gewählte Beschleunigung fortlaufend berechnet, dabei ist die erforderliche Motorleistung während der Beschleunigungsphase:

$P = Pw + Pa$    $P$ = Motorleistung
                        $Pw$ = Fahrwiderstandsleistung
                        $Pa$ = Beschleunigungsleistung

Als Leistungsänderung ergibt sich:

$P_2 - P_1 = Pw2 - Pw1 + Pa2 - Pa1$

Infolge von sehr kleinen Zeitintervallen kann

$Pw2 = Pw1$

angenommen werden.

Aus $Pa = m \cdot km \cdot a \cdot V$    $m$ = Masse
                                 $km$ = Korrekturfaktor für Drehmassen
                                 $a$ = Beschleunigung
                                 $V$ = Geschwindigkeit

ergibt sich:

$P_2 - P_1 = m \cdot km \, (a2 \cdot V2 - a1 \cdot V1)$

Je nach Fahrzeugtyp und benötigter Genauigkeit kann m . km als fahrzeugkonstant festgelegt oder aus der Fahrzeugdynamik beim Anfahren errechnet werden. Die vom Fahrer über den Winkel des Beschleunigungspedal vorgegebene Beschleunigung ist eine theoretische Vorgabe. Der Einfluß von Fahrwiderständen wird dabei nicht berücksichtigt. Die sich praktisch einstellende Beschleunigung ist eine dem Pedalwinkel entsprechender Teilwert der Maximalbeschleunigung für den jeweiligen Fahrwiderstand.

Weiter besteht auch die Möglichkeit über einen Vergleich, Sollbeschleunigung zur gemessenen Istbeschleunigung eine ständige Anpassung vorzunehmen. Die für die vom Fahrer gewählte Beschleunigung benötigte Leistung wird also ständig gerechnet. Durch einfache Auswahlkriterien können von der Elektronik die optimalen Werte für Motorfüllungsgrad und Übersetzung im Getriebe festgelegt werden.

Bei Konstantfahrt und sich ändernden Fahrwiderständen wird ebenfalls die benötigte Leistungsdifferenz gerechnet und nach entsprechenden Auswahlkriterien das Optimum für Motorlast und Getriebeübersetzung gerechnet und eingestellt.

**Bezugszeichen**

| | |
|---|---|
| 1 | Motor |
| 11 | Leitung |
| 12 | Motorlast |
| 2 | Kupplung |
| 21 | Leitung |
| 3 | Getriebe |
| 31 | Leitung |
| 32 | Leitung |
| 4 | elektronische Steuer- und Regelanlage |
| 41 | Steuerleitung |
| 42 | Steuerleitung |
| 43 | Steuerleitung |

| 44 | Fußbremse |
|---|---|
| 45 | Leistungsdifferenz |
| 46 | Gradient für Leistungsänderung |
| 47 | Motorlast und Drehzahländerung |
| 48 | Getriebestellung |
| 49 | Signalausgabe |
| 5 | Beschleunigungspedal |
| 51 | Steuerleitung |
| 52 | Steuerkurve |
| 6 | Verzögerungspedal |
| 61 | Steuerleitung |
| 62 | Steuerleitung |
| 7 | Fahrzeug |
| 71 | Leitung Handbremsbetätigung |
| 72 | Fußbremsbetätigung |
| 73 | Abtriebsdrehzahl (Rad) |
| 8 | Fahrbereichswahleinrichtung |
| 81 | Leitung |
| 9 | Sensoren/Stellglieder |
| a | Beschleunigung |
| V | Betätigungswinkel |
| P | Fahrwiderstandsleistung |
| $P_1$ | Fahrwiderstandsleistung vor der Schaltung |
| $P_2$ | Fahrwiderstandsleistung nach der Schaltung |
| $P_2'$ | Fahrwidsrstandsleistung nach der Schaltung |
| V | Fahrzeuggeschwindigkeit |
| LR | Kurve Luft- und Rollwiderstand |
| LR1 ... 3 | Kurve Luft- und Rollwiderstand in Steigung |
| LR -1 ... -3 | Kurve Luft- und Rollwiderstand im Gefälle |
| A | Rechenintervalle |
| B | Fahrwiderstandslinie einer ersten Übersetzung |
| C | Fahrwiderstandslinie einer zweiten Übersetzung |
| X | Gangsprung |
| Y | Nachregelbereich |

## Patentansprüche

1. Fahrzeug-Bedien- und -Fahrtregeleinrichtung vorrangig für ein mit einem Automatgetriebe ausgerüstetes Motorfahrzeug (7) mit je einem Gas- und Bremspedal (5, 6) und einer elektronischen Steuer- und Regeleinrichtung (4) oder Steuer- und Regeleinrichtungen für den Motor (1), die Kupplung (2) und das Getriebe (3) sowie mit Einrichtungen für das Wählen (5, 6) und für das Einhalten (4) einer nahezu konstanten Fahrzeuggeschwindigkeit (Tempostat), die mit der Schaltpunkt- und Gangschaltermittlung zusammenwirkt, wobei die Tempostatwirkung über die Betätigung des Bremspedals (6) und während einer zum Beispiel von einem automatischen Getriebesystem bewirkten Schaltung aufgehoben wird, dadurch gekennzeichnet, daß das Gaspedal als Beschleunigungs- (5) und das Bremspedal als Verzögerungspedal (6) auf eine gemeinsame elektronische Steuer- und Regeleinrichtung (4) wirken, und daß bei Nichtbetätigung beider Pedale (5, 6) das Fahrzeug (7) von der elektronischen Steuer- und Regeleinrichtung (4) in einer Geschwindigkeit gehalten wird, die von einem der Pedale (5, 6) zuletzt durch eine Betätigung eingestellt worden ist, und daß während der Beschleunigung/Verzögerung sowie der Geschwindigkeitskonstanthaltung des Fahrzeuges (7) die Motorregelung und notwendige Schaltungen in einem Automatgetriebe (3) bewirkt oder bei einem halbautomatischen bzw. Handschaltgetriebe über optische oder akustische Hoch- bzw. Rückschaltaufforderungen dem Fahrer anzeigt, wobei der Schaltpunkt und der zu schaltende Gang nach dem gewünschten Fahrzustand, der über die Bedienung der Beschleunigungs- und Verzögerungspedale (5, 6) definiert wird, und einer vorgegebenen Strategie, zum Beispiel günstiger Kraftstoffverbrauch, ermittelt wird, und daß nach der schaltungsbedingten Absenkung des Motormomentes über eine selbsttätige Nachregelung (Y) der Kraftstoffzufuhr für den Motor die gleiche Leistung wie vor der Schaltung erzielt wird.

2. Fahrzeug-Bedien- und -Fahrtregeleinrichtung nach Anspruch 1, dadurch gekennzeichnet, daß die vorgegebene Strategie sich auf einen günstigen Kraftstoffverbrauch, günstige Abgaswerte, beschleunigungsorientiert oder auch auf Kombinationen aus diesen Parametern bezieht.

3. Fahrzeug-Bedien- und -Fahrtregeleinrichtung nach Anspruch 1, dadurch gekennzeichnet, daß über das Beschleunigungspedal (5) der elektronischen Steuer- und Regeleinrichtung eine Beschleunigungsanforderung vorgegeben wird, wobei das elektrische Signal für die Beschleunigungsanforderung dem Schwenk- oder Betätigungswinkel des Beschleunigungspedals proportional ist.

6

4. Fahrzeug-Bedien- und -Fahrtregeleinrichtung nach Anspruch 3, dadurch gekennzeichnet, daß die Beschleunigungsanforderung frei programmierbar und z. B. in einer Kurve dargestellt ist.

5. Fahrzeug-Bedien- und -Fahrtregeleinrichtung nach Anspruch 1, dadurch gekennzeichnet, daß über das Verzögerungspedal (der Betriebsbremse und/oder der elektronischen Steuer- und Regeleinrichtung (4)) in Abhängigkeit von der Betätigung z. B. Schwenkwinkel Freilauf- und/oder Verzögerungsanforderungen vorgegeben werden.

6. Fahrzeug-Bedien- und -Fahrtregeleinrichtung nach Anspruch 5, dadurch gekennzeichnet, daß bei einem:
- sehr kleinen Betätigungswinkel/Weg des Verzögerungspedals die Tempostatwirkung aufgehoben und der Motor (1) in den Leerlauf abgeregelt und die Kupplung (2) geöffnet und/oder das Getriebe (3) in die Neutralstellung gebracht wird;
- kleinen Betätigungswinkel/Weg die Kupplung (2) geschlossen und ein der Fahrzeuggeschwindigkeit entsprechender Gang für die Motorbremsung geschaltet wird;
- daß bei einer weiteren Betätigung des Verzögerungspedals die Bremsanlage des Fahrzeuges (7) direkt oder über die elektronische Steuer- und Regeleinrichtung (4) aktiviert wird, wobei die Bremsanlage aus der eigentlichen Fahrzeugbremse aber zusätzlich auch noch aus weiteren Bremseinrichtungen, z. B. einer Strömungsbremse, bestehen kann.

7. Fahrzeug-Bedien- und -Fahrtregeleinrichtung nach Anspruch 6, dadurch gekennzeichnet, daß in Verbindung mit einem sehr kleinen Betätigungsweg des Verzögerungspedals (6) in der elektronischen Steuer- und Regeleinrichtung (4) Zeitglieder angeordnet sind, so daß die Freilaufwirkung und Motorbremsung beim schnellen Betätigen des Verzögerungspedals ausgeschlossen sind.

8. Fahrzeug-Bedien- und -Fahrtregeleinrichtung nach Anspruch 1, dadurch gekennzeichnet, daß die Freilaufwirkung zusätzlich oder in Verbindung mit dem Beschleunigungspedal (5) erzielt wird, indem z. B. das Beschleunigungspedal kurz angetippt wird.

## Claims

1. An operational and travel-control device for motor vehicles, primarily for a motor vehicle (7) equipped with an automatic gearshift mechanism and with an accelerator and brake pedal each (5, 6) and an electronic control or regulating device (4) or control- and regulating devices for the engine (1), the clutch (2) and the gearing (3), as well as with devices for selecting (5, 6) and for maintaining (4) of approximately constant vehicle speed (Tempostat speed regulator) which cooperates with the gear points and the gear shift sensor, in which the tempostat effect is suspended by actuation of the brake pedal (6) and during a gear shift effected for example by means of an automatic gear shift system, characterised in that the accelerator pedal (5) and the brake pedal (6) act, respectively, with accelerating and delaying effect on a common electronic control- and regulating device (4), and that in the absence of an actuation of the two said pedals (5, 6) the vehicle (7) is kept at a speed which was last set by an actuation thereof, and that during the acceleration/deceleration and whilst the speed of the vehicle (7) is kept constant the engine regulation and the required gear shifts are effected in an automatic gearing (3) or in the case of semi-automatic or manual gearshifts are indicated to the driver by optical or acoustic demands for shifting into higher or lower gear, whilst the shift point and the gear to be selected is determined in accordance with the desired-travel condition defined by the actuation of the accelerator- and brake pedals (5, 6), and in accordance with a predetermined parameter, for example advantageous fuel consumption, and that following the shift-dependent lowering of the engine moment, by an automatic re-adjustment (Y) of the fuel feed to the engine the same output is achieved as before the shifting of the gears.

2. An operational and travel-control device for motor vehicles according to claim 1, characterised in that the predetermined parameter covers an accelerationoriented, advantageous fuel consumption, advantageous exhaust-gas characteristics or also a combination of these parameters.

3. An operational and travel-control device according to claim 1, characterised in that by means of the accelerator pedal (5) an acceleration command is imposed on the electronic control and regulating device the electrical signal of the acceleration command being proportional to the pivot- or actuation angle of the accelerator pedal.

4. An operational and travel-control device according to claim 3, characterised in that the acceleration demand is freely programmable and is represented by e. g. a curve.

5. An operational and travel-control device according to claim 1, characterised in that by means of the deceleration pedal (the operational brake and/or the electronic control- and regulating device (4)) freewheeling and/or deceleration commands are fed in as a function of actuation, e. g. the pivot angle.

6. An operational and travel-control device according to claim 5, characterised in that:
- in case of a very small actuation anale/stroke of the brake pedal the tempostat effect is suspended and the engine (1) is set to idling and the clutch (2) is opened and/or the gear (3) is brought into the neutral position;
- in case of a small actuation angle/stroke the clutch (2) is engaged and a gear corresponding to the speed of the vehicle is selected for engine braking;
- that by a further actuation of the brake pedal the braking system of the vehicle (7) is activated either directly or by means of the electronic control- and regulating device (4), where the braking system may consist of the vehicle brake itself or of additional other braking devices, e. g. a fluid brake.

7. An operational and travel-control device according to claim 6, characterised in that in association with a very small stroke of the brake pedal (6) clock elements are arranged in the electronic control- and regulating device (4), so that the freewheeling effect and the engine braking are excluded in case of a rapid actuation of the brake pedal.

8. An operational and travel-control device according to claim 1, characterised in that the freewheeling effect is achieved additionally or in association with the accelerator pedal (5), e. g. by briefly tipping the accelerator pedal.

## Revendications

1. Installation de commande et de régulation de vitesse d'un véhicule, notamment d'un véhicule à moteur (7) équipé d'une transmission automatique, comportant des pédales respectives des gaz et de frein (5, 6) et un ou plusieurs dispositifs électroniques (4) de commande et de régulation pour le moteur (1), l'embrayage (2) et la boîte de vitesses (3), ainsi que des dispositifs pour sélectionner (5, 6) et pour maintenir (4) une vitesse quasi constante du véhicule (régulation de vitesse), coopérant avec la détermination des points de commutation et des changements de rapport, l'action de régulation de vitesse étant supprimée par l'actionnement de la pédale de frein (6) et durant un changement de rapport effectué par exemple par une transmission automatique, caractérisée en ce que la pédale des gaz, en tant que pédale d'accélération (5), et la pédale de frein, en tant que pédale de ralentissement (6), agissent sur un dispositif électronique commun (4) de commande et de régulation, et en ce qu'en cas de non-actionnement des deux pédales (5, 6), le véhicule (7) est maintenu par le dispositif électronique de commande et de régulation (4) à une vitesse qui a été déterminée en dernier lieu par un actionnement d'une des pédales (5, 6) et en ce que, durant l'accélération ou ralentissement et durant le maintien à vitesse constante du véhicule (7), le dispositif effectue la régulation du moteur et les changements de rapports nécessaires dans une transmission automatique (3) ou, dans le cas d'une transmission semi-automatique ou à commande manuelle, délivre au conducteur des signaux optiques ou acoustiques l'invitant à changer de rapport vers le haut ou vers le bas, le point de commutation et le rapport à enclencher étant déterminés en fonction de l'état de marche voulu, défini par la manoeuvre des pédales d'accélération et de ralentissement (5, 6), et par une stratégie prédéfinie, par exemple une faible consommation de carburant, et en ce qu'après une réduction du couple moteur due à un changement de rapport, le dispositif tend à rétablir la même puissance qu'avant le changement au moyen d'un nouveau réglage automatique (Y) de l'alimentation en carburant du moteur.

2. Installation selon la revendication 1, caractérisée en ce que ladite stratégie prédéfinie concerne l'optimisation de la consommation de carburant, des gaz d'échappement, de l'accélération, ou de combinaisons de ces paramètres.

3. Installation selon la revendication 1, caractérisée en ce qu'une demande d'accélération est indiquée au dispositif électronique de commande et de régulation au moyen de la pédale d'accélération (5), le signal électrique de demande d'accélération étant proportionnel à l'angle de pivotement ou d'actionnement de la pédale d'accélération.

4. Installation selon la revendication 3, caractérisée en ce que la demande d'accélération est programmable à volonté et est représentée par exemple par une courbe.

5. Installation selon la revendication 1, caractérisée en ce que des demandes de marche à vide et/ou de ralentissement sont indiquées au moyen de la pédale de ralentissement (du frein principal et/ou du dispositif électronique de commande et de régulation (4)) en fonction de l'actionnement, par exemple de l'angle de pivotement.

6. Installation selon la revendication 5, caractérisée en ce que:
- pour un très petit angle ou chemin d'actionnement de la pédale de ralentissement, l'action de régulation de vitesse est supprimée, le moteur (1) est réglé en marche à vide, l'embrayage (2) est déclenché et/ou la boîte de vitesses (3) est mise au point mort;
- pour un petit angle ou chemin d'actionnement, l'embrayage (2) est enclenché et un rapport correspondant à la vitesse du véhicule et créant un freinage par le moteur est enclenché;
- pour un actionnement plus grand de la pédale de ralentissement, l'installation de freinage du véhicule (7) est actionnée directement ou au moyen du dispositif électronique de commande et de régulation (4), cette installation de freinage pouvant être constituée par le frein proprement dit du véhicule, mais aussi par des dispositifs de freinage supplémentaires, par exemple un ralentisseur hydraulique.

7. Installation selon la revendication 6, caractérisée en ce que le dispositif électronique de commande et de régulation (4) comporte des éléments temporisés en relation avec ledit très petit chemin d'actionnement de la pédale de ralentissement (6), ces éléments étant agencés de façon à éliminer l'effet de marche à vide et le freinage par le moteur en cas d'actionnement rapide de la pédale de ralentissement.

8. Installation selon la revendication 1, caractérisée en ce que l'effet de marche à vide est obtenu en outre ou en combinaison avec la pédale d'accélération (5), notamment quand on appuie brièvement sur la pédale d'accélération.

FIG.1

FIG.2

FIG.3

FIG.4

FIG.5

P [kW]

B

C

P₂

P₁

P′₂

x

y

T [Nm]

n_M [1/min]